# EUROPEAN PATENT SPECIFICATION

(11) **EP 2 901 468 B1**
(45) Date of publication and mention of the grant of the patent: **02.01.2019**
(21) Application number: 13766317.5
(22) Date of filing: 24.09.2013
(51) Int. Cl.: H01H 39/00, H01H 3/02, B23D 15/12

(54) **SHORT-CIRCUIT SHUTDOWN SWITCH**
KURZSCHLUSS-ABSCHALTUNGSSCHALTER
COMMUTATEUR DE FERMETURE EN CAS DE COURT-CIRCUIT

(30) Priority: 25.09.2012 DE 102012217251; 27.11.2012 DE 102012221664
(43) Date of publication of application: 05.08.2015
(73) Proprietor: TE Connectivity Germany GmbH, 64625 Bensheim (DE)
(72) Inventor: KOETTER, Albert, 10783 Berlin (DE); ZIEGLER, Titus, 10179 Berlin (DE); HÄHNEL, Thomas, 14199 Berlin (DE); WAGNER, René, 10247 Berlin (DE); KRAMER, Uwe, 15732 Schulzendorf (DE); MARANKE, Christian, 16845 Lüchfeld (DE)
(74) Representative: Patentanwaltskanzlei WILHELM & BECK
(86) International application number: PCT/EP2013/069834
(87) International publication number: WO 2014/048913

(56) References cited:
- EP-A1- 1 492 139
- WO-A1-2004/077478
- US-A- 2 861 153
- US-A- 3 915 236
- US-A1- 2012 194 954
- US-B1- 6 556 119

## Description

The present invention relates to a short-circuit shutdown switch according to claim 1. Short-circuit shutdown switches to break electric circuits in the event of a short circuit are known from prior art. Electromechanical short-circuit shutdown switches having a bridging contact arrangement exist, as is also known from relays and contactors. Such short-circuit shutdown switches having bridging contact arrangements have the disadvantage that an expensive contact set must be available for a short circuit to be switched off only once. Moreover, a large amount of contact force must be applied due to the two pairs of bridging contacts arranged in series and the resultant contact resistance with which the contacts must be held together over the whole lifetime of the short-circuit shutdown switch in order to keep the resistance low. It is also disadvantageous that shock and vibration loads can reduce the contact forces temporarily, as a result of which the contacts can weld together at high currents.

Likewise known from prior art are pyrotechnical battery shutdown switches having cutting elements, where a wedge, triggered by an explosion, cuts through an electric cable. As a result of the high potential explosive energy, the cutting wedge can also cut through solid cable cross sections mechanically. Such battery shutdown switches are, however, associated with high costs. An example of prior art switch is disclosed in US-B-6556119.

An object of the present invention is to provide an improved short-circuit shutdown switch. This object is achieved through a short-circuit shutdown switch having the features of claim 1. Preferred developments are specified in the dependent claims.

A short-circuit shutdown switch according to the invention comprises a load current path provided to carry a load current, a central section arranged between a first predetermined cutting zone and a second predetermined cutting zone in the load current path, and a cutting plunger provided to cut the first predetermined cutting zone and the second predetermined cutting zone. The two predetermined cutting zones are advantageously arranged in series in the load current path of this short-circuit shutdown switch. Therefore only half of the voltage applied at the load current path drops off via each of the predetermined cutting zones. When the predetermined cutting zones of the short-circuit shutdown switch are cut through, less pronounced arcs occur advantageously as a result. Because the central section is completely separated between the predetermined cutting zones, an arc extinguishing length and a creepage path double advantageously in respect of only one cutting zone being cut through. An additional advantage of this short-circuit shutdown switch is that the predetermined cutting zones can be cut with less energy without the use of pyrotechnical explosives. The short-circuit shutdown switch can be produced advantageously at low cost.

In one embodiment of the short-circuit shutdown switch, the load current path comprises a first conductor section and a second conductor section. Here a separating section comprising the central section is arranged between the first conductor section and the second conductor section in the load current path. Advantageously, the separating section can be constructed with a smaller cross section than the conductor sections of the load current path. As a result, the predetermined cutting zones of the separating section can be cut through with less energy.

In one embodiment of the short-circuit shutdown switch, the conductor sections and the separating section are formed of one or multiple parts. An advantage of a single-part construction of the conductor sections and the separating section is that the short-circuit shutdown switch then has only a small number of individual components, which can be produced at lower cost. An advantage of a multiple part construction of the conductor sections and the separating section is that the separating section can be constructed as a replaceable part. Moreover, the conductor sections and separating section can then be optimised to perform their specific tasks separately from one another.

In one embodiment of the short-circuit shutdown switch, the first predetermined cutting zone has a first separating web. At the same time, the second predetermined cutting zone has a second separating web. Moreover, the first separating web and the second separating web each have a reduced cross section in comparison to the rest of the separating section. Advantageously, the first separating web of the first predetermined cutting zone and the second separating web of the second predetermined cutting zone can then be cut through by the cutting plunger particularly easily and with low energy. It is possible in the process to construct the first separating web and the second separating web such that they are very short, so that the influence of the predetermined cutting zones on an electrical resistance of the load current path is low.

In one embodiment of the short-circuit shutdown switch, the first separating web and the second separating web are staggered laterally in relation to the intended direction of current flow. Advantageously, the cutting plunger can then cut through the first separating web of the first predetermined cutting zone and the second separating web of the second predetermined cutting zone successively, whereby the mechanical forces acting on the cutting plunger and the mechanical forces to be exerted by the cutting plunger are minimised. This facilitates a cutting-through of the predetermined cutting zones by the cutting plunger with less energy overall, whereby the structural complexity of the short-circuit shutdown switch is reduced.

In one embodiment of the short-circuit shutdown switch, the first predetermined cutting zone has two first separating webs. At the same time the second predetermined cutting zone has two second separating webs. Advantageously, the electrical resistance of the predetermined cutting zones declines as a result of the provision of two separating webs on each predetermined cutting zone. The respective two separating webs of the predetermined cutting zones can be cut through successively by the cutting plunger, whereby the maximum forces to be exerted by the cutting plunger at any time do not increase.

In one embodiment of the short-circuit shutdown switch, the separating section has an angled blade. Advantageously, the blade can serve as a cooling fin to dissipate the heat arising in the predetermined cutting zones. The angled blade can be angled here for example at 90° or at 180°.

In one embodiment of the short-circuit shutdown switch, the cutting plunger can be pre-stressed over a spring element in a resting position. As a result, the energy needed to cut through the predetermined cutting zones with the cutting plunger can be stored in the spring element. When the short-circuit shutdown switch is triggered, the cutting plunger can be accelerated by the spring element against the predetermined cutting zones.

In one embodiment of the short-circuit shutdown switch, a plunger surface of the cutting plunger facing the central section is chamfered. Advantageously, separating webs of the predetermined cutting zones can then be cut through successively by the plunger surface of the cutting plunger, whereby a task to be performed by the cutting plunger can be spread over a longer period of time and the peak forces to be exerted by the cutting plunger can be reduced.

The central section has a hole. At the same time the cutting plunger has a pin. Here the pin is arranged in the hole. Consequently, the central section is carried along to the final position of the cutting plunger after the predetermined cutting zones have been cut through by the cutting plunger. Because of this, an air gap above the predetermined cutting zones that have been cut through enlarges advantageously, whereby the short-circuit shutdown switch is particularly reliable.

In one embodiment of the short-circuit shutdown switch, the hole and the pin each have a non-circular cross section. Advantageously, a twisting and tilting of the central section that has been separated between the predetermined cutting zones by the cutting plunger is thereby prevented. The non-circular cross section can, for example, be a rhombus-shaped cross section.

In one embodiment of the short-circuit shutdown switch, an edge region of a plunger surface of the cutting plunger facing the central section is elevated in comparison to a remaining section of the plunger surface of the cutting plunger. Advantageously, the central section separated by the cutting plunger between the predetermined cutting zones can be guaranteed to be carried along to the final position of the cutting plunger and prevented from rotating as a result of the elevated edge region of the plunger surface.

In one embodiment of the short-circuit shutdown switch, the cutting plunger has a groove orientated parallel to a direction of motion of the cutting plunger. Advantageously, a remaining part of a separating web of a predetermined cutting zone is thereby prevented from coming into contact with the cutting plunger during the movement of the cutting plunger and thus causing friction or snagging. Moreover, by providing the groove an additional air gap is created.

In one embodiment of the short-circuit shutdown switch, the same has a housing. Advantageously, the housing can serve to retain the components of the short-circuit shutdown switch.

In one embodiment of the short-circuit shutdown switch, the cutting plunger has a longitudinal rib orientated parallel to a direction of motion of the cutting plunger. Moreover, the housing has a guide groove. The longitudinal rib of the cutting plunger is guided here in the guide groove of the housing. Advantageously, the guiding of the longitudinal rib in the guide groove causes a rotational locking of the cutting plunger in the housing of the short-circuit shutdown switch. Moreover, the longitudinal rib on the cutting plunger enlarges an air and creepage gap between the first predetermined cutting zone and the second predetermined cutting zone which have been cut through, whereby a risk of an electrical arc is reduced advantageously.

In one embodiment of the short-circuit shutdown switch, a magnet is arranged inside the housing. Advantageously, a magnetic field generated by the magnet can contribute to extinguishing an arc occurring in the event of a short-circuit shutdown.

The invention is described in more detail hereinafter with reference to the drawings, in which:
Figure 1 shows a perspective view of part of a short-circuit shutdown switch;
Figure 2 shows a sectional lateral view of a load current path of the short-circuit shutdown switch;
Figure 3 shows a plan view onto the load current path;
Figure 4 shows a perspective view of the load current path;
Figure 5 shows a plan view onto a separating section of the load current path of the short-circuit shutdown switch;
Figure 6 shows a perspective view of a separating section according to another embodiment;
Figure 8 shows a perspective view of part of the short-circuit shutdown switch with a cutting plunger;
Figure 9 shows a sectional view of the cutting plunger in a first position;
Figure 10 shows a sectional view of the cutting plunger in a second position whilst it is cutting through the predetermined cutting zones;
Figure 11 shows a sectional view of the cutting plunger after the predetermined cutting zones of the load current path have been cut through;
Figure 12 shows another sectional view of the cutting plunger after the predetermined cutting zones of the load current path have been cut through;
Figure 13 shows a view of the separating section and the cutting plunger from below;
Figure 14 shows a view of a separating section and a cutting plunger according to another embodiment from below;
Figure 15 shows a sectional view of the cutting plunger; and
Figure 16 shows a sectional view of the cutting plunger and part of a housing of the short-circuit shutdown switch.

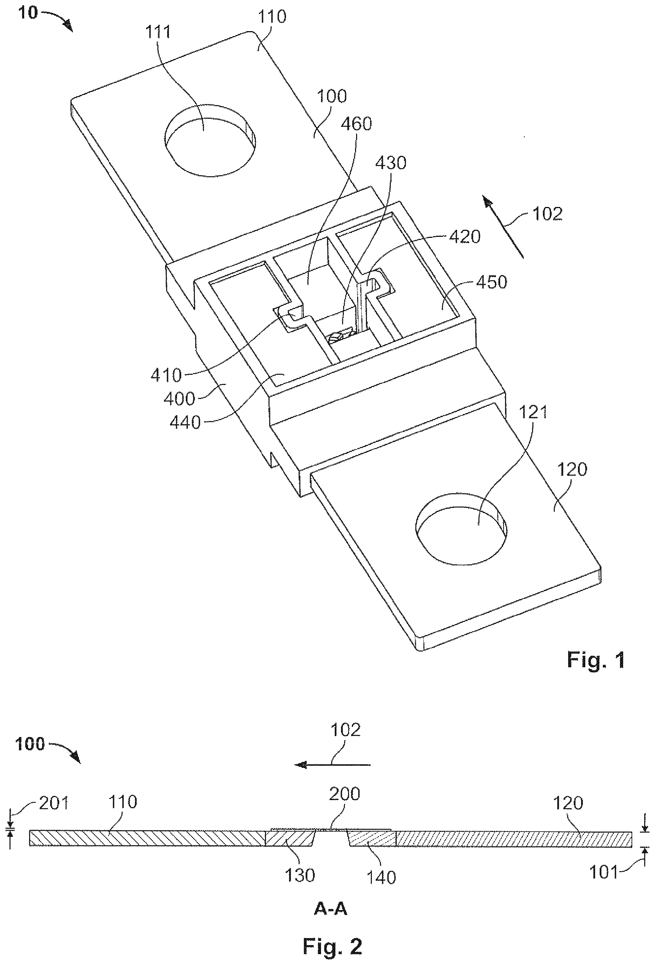

Figure 1 shows a slightly schematic perspective view of part of a short-circuit shutdown switch 10. The short-circuit shutdown switch 10 serves to open an electric circuit in the event of a short circuit. The electric circuit can be provided here for high voltages and high electric currents. The short-circuit shutdown switch 10 can, for example, be used in electric or hybrid vehicles.

The short-circuit shutdown switch 10 has a housing 400. Figure 1 only shows part of this housing 400. The housing 400 can, for example, be produced from plastic. A load current path 100 provided to carry an electric current in a current flow direction 102 runs through the housing 400. The current can, of course, also flow in the load current path 100 in the opposite direction to the current flow direction 102 shown.

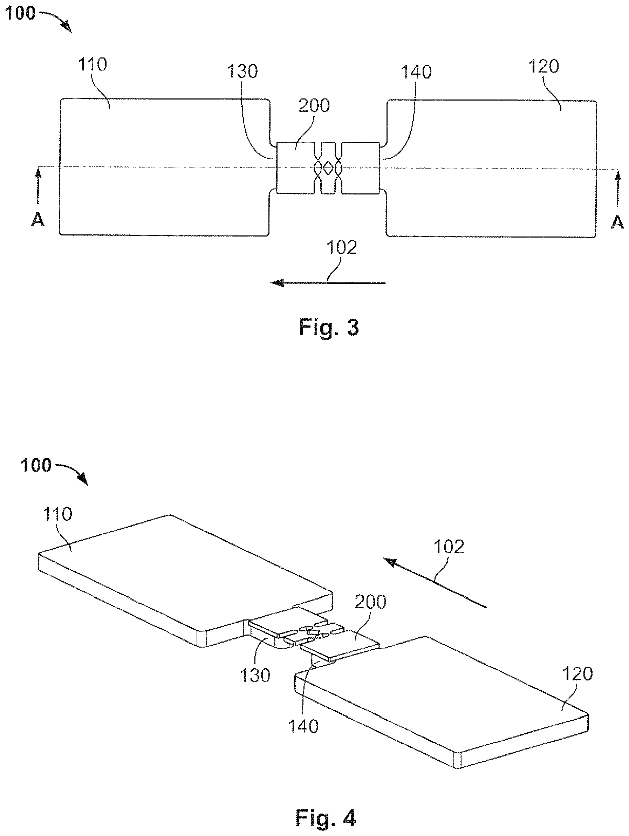

Figure 2 shows a sectional lateral view of the load current path 100. Figure 3 shows a plan view onto the load current path 100. Figure 4 shows a perspective view of the load current path 100.

The load current path 100 comprises a first conductor section 110 and a second conductor section 120. The first conductor section 110 and the second conductor section 120 are constructed as substantially flat plates with a first thickness 101 and consist of a material with good electric conductivity. The first thickness 101 as well as a width of the conductor sections 110, 120 are selected to be such a size that the conductor sections 110, 120 have a large cross section and low electrical resistance.

The first conductor section 110 and the second conductor section 120 are arranged one behind the other in the current flow direction 102 in the load current path 100. On the side facing the second conductor section 120, the first conductor section 110 has a first connection section 130. On its side facing the first conductor section 110, the second conductor section 120 has a second connection section 140. In the first connection section 130 and in the second connection section 140, the conductor sections 110, 120 have a reduced width. This is, however, not absolutely necessary.

The load current path 100 also comprises a separating section 200. The separating section 200 is connected to the first connection section 130 of the first conductor section 110 and the second connection section 140 of the second conductor section 120 such that they are electrically conductive. Consequently, the first conductor section 110 of the load current path 100 is connected via the separating section 200 to the second conductor section 120 such that it is electrically conductive.

The separating section 200 is constructed as a thin plate with a second thickness 201 and consists of a material with good electric conductivity. The second thickness 201 is smaller than the first thickness 101 of the conductor sections 110, 120. The width of the separating section 200 perpendicular to the current flow direction 102 is roughly equivalent to the width of the connection sections 130, 140 of the conductor sections 110, 120. Thus the separating section 200 has a considerably smaller cross section perpendicular to the current flow direction 102 than the conductor sections 110, 120.

The first conductor section 110, the separating section 200 and the second conductor section 120 can be constructed as separate parts, as shown in Figures 2, 3 and 4, and be connected to each other in the region of the connection sections 130, 140 such that they are electrically conductive. The separating section 200 could, however, also be constructed as one part with the first conductor section 110 and the second conductor section 120 of the load current path 100.

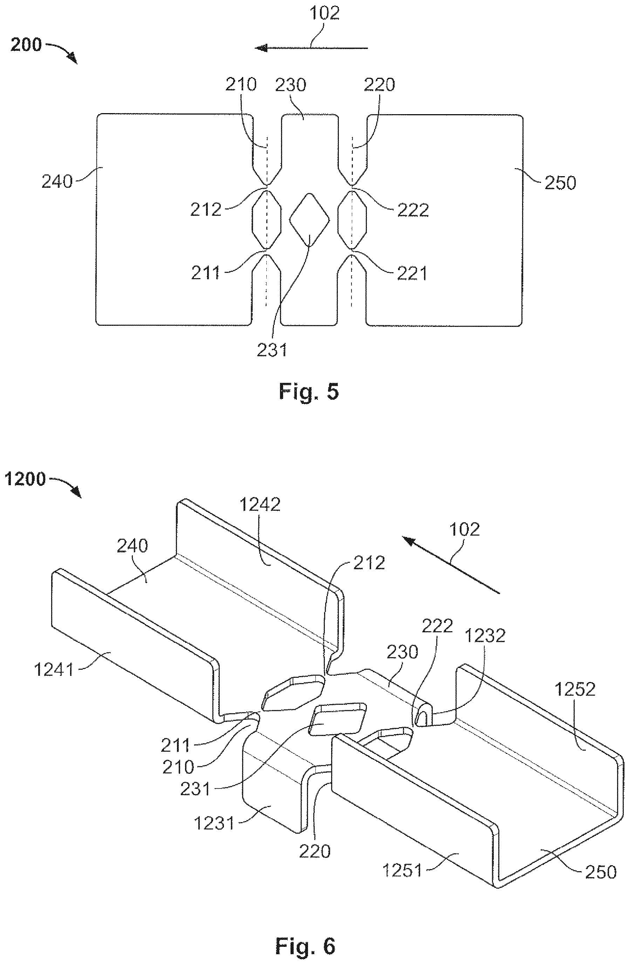

Figure 5 shows a plan view onto the separating section 200 in an enlarged view. The separating section 200 comprises a first inlet 240, a central section 230 and a second inlet 250, which are arranged one behind the other in the current flow direction 102. The first inlet 240 is connected to the central section 230 via a first predetermined cutting zone 210. The second inlet 250 is connected to the central section 230 via a second predetermined cutting zone 220.

The first predetermined cutting zone 210 is formed by a first separating web 211 and a third separating web 212. The second predetermined cutting zone 220 is formed by a second separating web 221 and a fourth separating web 222. The first separating web 211 and the third separating web 212 are arranged next to one another transverse to the current flow direction 102. Accordingly, the second separating web 221 and the fourth separating web 222 are also arranged next to one another transverse to the current flow direction 102.

Transverse to the current flow direction 102, the separating webs 211, 212, 221, 222 have a very greatly reduced width in comparison to the width of the rest of the separating section 200. Thus the separating section 200 has a narrowed cross section in the region of the predetermined cutting zones 210, 220 perpendicular to the current flow direction 102.

In the current flow direction 102, the separating webs 211, 212, 221, 222 are preferably constructed such that they are as short as possible in order to keep the electrical resistance of the first predetermined cutting zone 210 and the second predetermined cutting zone 220 as low as possible. The whole separating section 200 is also preferably constructed such that it is as short as possible between the first conductor section 110 and the second conductor section 120 in the current flow direction 102 in order to keep the electrical resistance of the separating section 200 as low as possible.

The central section 230 of the separating section 200 arranged between the first predetermined cutting zone 211 and the second predetermined cutting zone 212 has a hole 231 having a rhombus-shaped cross section in the illustrated example.

Figure 6 shows a perspective view of a separating section 1200 according to an alternative embodiment. The separating section 1200 has some consistencies with the separating section 200. Consistent components are provided with the same reference numerals and are not described in more detail again hereinafter. The separating section 1200 is preferably provided as a separate part from the conductor sections 110, 120 of the load current path 100.

A first upper blade 1241 and a second upper blade 1242 are arranged on the first inlet 240 of the separating section 1200. The upper blades 1241, 1242 are arranged on outer edges of the first inlet 240 orientated parallel to the current flow direction 102 and are angled at 90° to the first inlet 240. Accordingly, a third upper blade 1251 and a fourth upper blade 1252 are also arranged on the second inlet 250 of the separating section 1200. A first lower blade 1231 and a second lower blade 1232 are arranged on outer edges, orientated in the current flow direction 102, of the central section 230 of the separating section 1200 and are angled at 90° to the central section 230. The lower blades 1231, 1232 extend here in an opposite spatial direction to the upper blades 1241, 1242, 1251, 1252. The orientation of the blades 1231, 1232, 1241, 1242, 1251, 1252 could, however, also be different. In particular, the blades 1231, 1232, 1241, 1242, 1251, 1252 could also be angled at an angle other than a right angle or folded at 180°.

If the separating section 1200 carries a load current in the current flow direction 102 then heat is generated in the regions of the predetermined cutting zones 210, 220 due to the comparatively high electrical resistance of the separating webs 211, 212, 221, 222. This heat can be dissipated via the surface of the separating section 200 enlarged by the blades 1231, 1232, 1241, 1242, 1251, 1252. Some of the blades 1231, 1232, 1241, 1242, 1251, 1252 can, however, also be omitted.

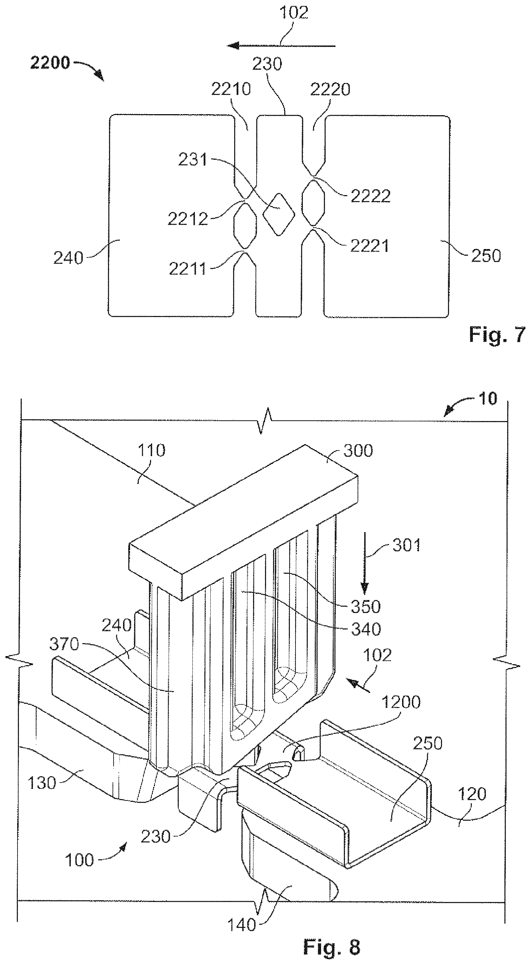

Figure 7 shows a plan view onto a separating section 2200 according to another embodiment. This separating section 2200 also has consistencies with the separating section 200 according to the first embodiment, which is why corresponding components are provided with the same reference numerals again.

In the case of separating section 2200, the first inlet 240 is connected to the central section 230 via a first predetermined cutting zone 2210. The second inlet 250 is connected to the central section 230 via a second predetermined cutting zone 2220. The first predetermined cutting zone 2210 has a first separating web 2211 and a third separating web 2312. The second predetermined cutting zone 2220 has a second separating web 2221 and a fourth separating web 2222. The configuration of the separating webs 2211, 2212, 2221, 2222 itself corresponds to that of the separating webs 211, 212, 221, 222 of separating section 200. The first separating web 2211 and the third separating web 2212 of the first predetermined cutting zone 2210 are also arranged next to each other transverse to the current flow direction 102, as are the second separating web 2221 and the fourth separating web 2222 of the second predetermined cutting zone 2220.

However, in contrast to separating section 200, the first separating web 2211 and the second separating web 2221 are also staggered in relation to each other transverse to the current flow direction 102, as are the third separating web 2212 and the fourth separating web 2222. In the case of separating section 2200 therefore, there follows one after the other in a direction perpendicular to the current flow direction 102 the first separating web 2211 of the first predetermined cutting zone 2210, the second separating web 2221 of the second predetermined cutting zone 2220, the third separating web 2212 of the first predetermined cutting zone 2210 and the fourth separating web 2222 of the second predetermined cutting zone 2220. This arrangement has the advantage that the separating webs 2211, 2212, 2221, 2222 can be cut through successively so that only one separating web 2211, 2212, 2221, 2222 is ever being cut through at any one time. This becomes even clearer in connection with the following description.

Figure 8 shows a section of the short-circuit shutdown switch 10 in perspective view. In the illustrated example, the separating section 1200 according to the embodiment described with reference to Figure 6 is arranged in the load current path 100 between the first connection section 130 of the first conductor section 110 and the second connection section 140 of the second conductor section 120. The separating section 200 from Figure 5 or the separating section 2200 from Figure 7 could, however, also be provided.

Figure 8 also shows a cutting plunger 300 of the short-circuit shutdown switch 10. The cutting plunger 300 is arranged in a direction perpendicular to the current flow direction 102 above the central section 230 of the separating section 1200. Figure 8 shows the cutting plunger 300 in a resting position. The cutting plunger 300 serves to cut through the first predetermined cutting zone 210 and the second predetermined cutting zone 220 of the separating section 1200 in the event of a short circuit, in order to interrupt an electric current flowing in the load current path 100. The cutting plunger 300 can, for example, be plastic and be produced as a low-cost injection moulded part.

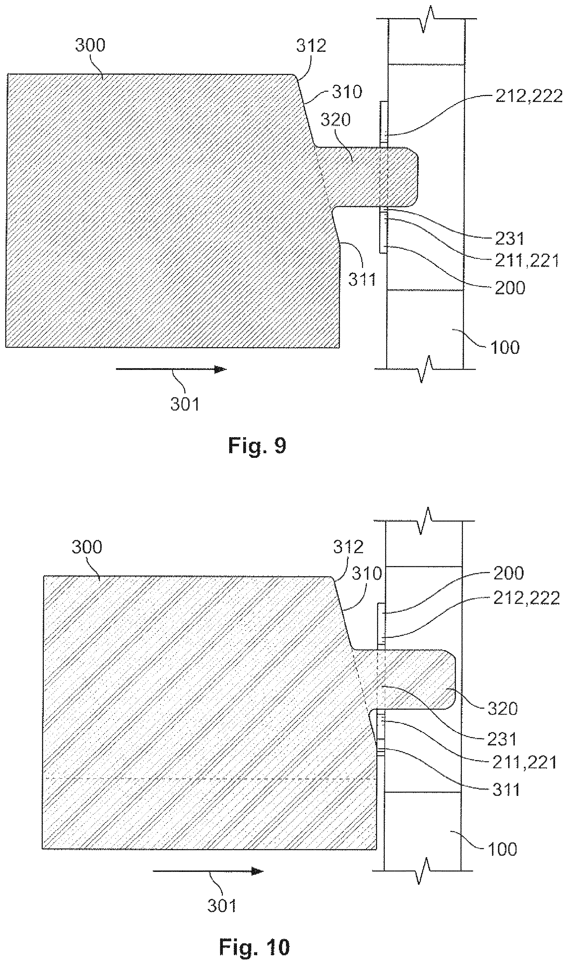

Figure 9 shows the cutting plunger 300 in its resting position in a sectional lateral view. Here the cross section runs perpendicular to the current flow direction 102. In the resting position of the cutting plunger 300 in the short-circuit shutdown switch 10 shown in Figures 8 and 9, the cutting plunger 300 is not engaged with the separating section 200, 1200 in the load current path 100 of the short-circuit shutdown switch 10. In the illustrated resting position, the cutting plunger 300 can, for example, be pre-stressed over a spring element. In the event of a short circuit, the cutting plunger 300 is triggered. The spring element then accelerates the cutting plunger 300 in a direction of motion 301 towards the separating section 200, 1200 in order to cut through the predetermined cutting zones 210, 220. The energy required to cut through the predetermined cutting zones 210, 220 is thus stored in the spring element in the resting position of the cutting plunger 300 in this embodiment. A mechanical tensioning device of the short-circuit shutdown switch 10 can, however, also be constructed differently.

The cutting plunger 300 has a plunger surface 310 facing the separating section 200, 1200. The plunger surface 310 is chamfered at an angle of 30°, for example, with respect to a plane through the separating section 200, 1200. Thus the plunger surface 310 has a front end 311, which is located nearer to the separating section 200, 1200 than a back end 312 of the plunger surface 310 when the cutting plunger 300 is in the resting position. The front end 311 of the plunger surface 310 here is arranged nearer to the first separating web 211 and the second separating web 221. The back end 312 of the plunger surface 310 is nearer to the third separating web 212 and the fourth separating web 222.

Figure 10 shows another sectional view of the cutting plunger 300. In the view in Figure 10 the cutting plunger 300 has been moved out of its resting position in a direction of motion 301 towards the separating section 200, 1200. The chamfer of the plunger surface 310 causes the front end 311 of the plunger surface 310 to already be in contact with the central section 230 of the separating section 200, 1200, whilst the back end 312 of the plunger surface 310 is still located at a distance from the central section 230 of the separating section 200, 1200. As a result, the chamfer of the plunger surface 310 of the plunger 300 causes the cutting plunger 300 first to cut through the first separating web 211 of the first predetermined cutting zone 210 and the second separating web 221 of the second predetermined cutting zone 220. Only at a later point in time does the cutting plunger 300 cut through the third separating web 212 of the first predetermined cutting zone 210 and the fourth separating web 222 of the second predetermined cutting zone 220. This has the advantage that the force needed to cut through only two separating webs 211, 221, 212, 222 simultaneously is less than the force needed to cut through all four separating webs 211, 221, 212, 222 simultaneously. Thus the force with which the cutting plunger 300 has to be moved in the direction of motion 301 is lower due to the chamfered plunger surface 310 than would be the case with a non-chamfered plunger surface.

If the separating section 2200 in Figure 7 is arranged in the load current path 100 of the short-circuit shutdown switch 10, then the lateral staggering of the second separating web 2221 in relation to the first separating web 2211 and the lateral staggering of the fourth separating web 2220 in relation to the third separating web 2212 causes the chamfered plunger surface 310 of the cutting plunger 300 to cut through the first separating web 2211, the second separating web 2221, the third separating web 2212 and the fourth separating web 2222 each successively during the movement of the cutting plunger 300 in the direction of motion 301. Thus in the case of separating section 2200 only one separating web 2211, 2212, 2221, 2222 is cut through at any one time. As a result, the forces needed to move the cutting plunger 300 in the direction of motion 301 are advantageously even lower when using separating section 2200.

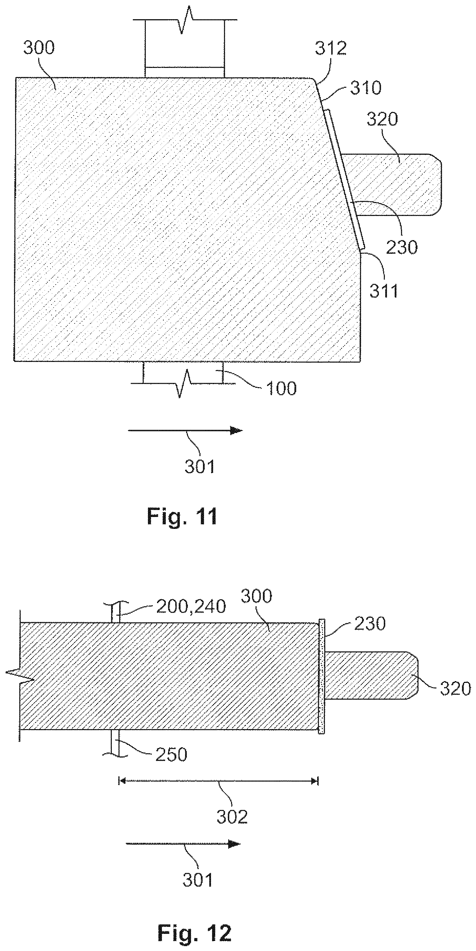

Figure 11 shows another sectional view of the cutting plunger 300 of the short-circuit shutdown switch 10. In the view in Figure 11, the cutting plunger 300 has been moved further in the direction of motion 301 as far as a final position of the cutting plunger 300. At the same time the cutting plunger 300 has completely cut through the first predetermined cutting zone 210 and the second predetermined cutting zone 220, so that the central section 230 of the separating section 200 has been completely separated. The load current path 100 of the short-circuit shutdown switch has thereby been broken.

The cutting plunger 300 has a pin 320, which is arranged on the plunger surface 310 of the cutting plunger 300 and extends parallel to the direction of motion 301. In the resting position of the cutting plunger 300 shown in Figures 8 and 9, the pin 320 is arranged in the hole 231 of the central section 330 of the separating section 200, 1200. During the movement of the cutting plunger 300 shown in Figures 10 and 11 in the direction of motion 301, the pin 220 moves further into the hole 231 of the central section 230. As a result the cutting plunger 300 carries the central section 230 further with it even after the complete separation of the central section 230 out of the separating section 200, 1200 by cutting through the predetermined cutting zones 210, 220. In the process the central section 230 remains located against the plunger surface 310, as shown in Figure 11. The carrying of the central section 230 by the cutting plunger 300 has the advantage that it ensures a reliable separation of the central section 230 from the remaining sections 240, 250 of the separating section 200, 1200.

Figure 12 shows another sectional view of the cutting plunger 300 of the short-circuit shutdown switch 10 in the final position of the cutting plunger 300. In the view in Figure 12, the cross section runs perpendicular to the cross section in the views of Figures 9, 10, 11 and parallel to the current flow direction 102.

Figure 12 shows that the central section 230 of the separating section 200, 1200 has been separated when the predetermined cutting zones 210, 220 are cut through and during the movement of the cutting plunger 300 in the direction of motion 301 by a cutting depth 302 orientated in the direction of motion 301 from the inlets 240, 250 of the separating section 200, 1200. Here the central section 230 is spaced by the cutting depth 302 away from the first inlet 240 and also by the cutting depth 302 away from the second inlet 250.

The provision of two predetermined cutting zones 210, 220 in the current flow direction 102 of the load current patch 100 in series causes only half of the total voltage applied via the load current path 100 to drop at each of the predetermined cutting zones 210, 220 when the predetermined cutting zones 210, 220 are cut through. As a result, the separating webs 211, 212, 221, 222 of the predetermined cutting zones 210, 220 advantageously form less pronounced arcs during the cutting process. Moreover, the complete separation of the central section 230 causes the central section 230 to be separated by the cutting depth 302 from the first inlet 240 and by the cutting depth 302 from the second inlet 250. As a result, an arc extinguishing length and a creepage gap between the first inlet 240 and the second inlet 250 of the separating section 200, 1200 also double.

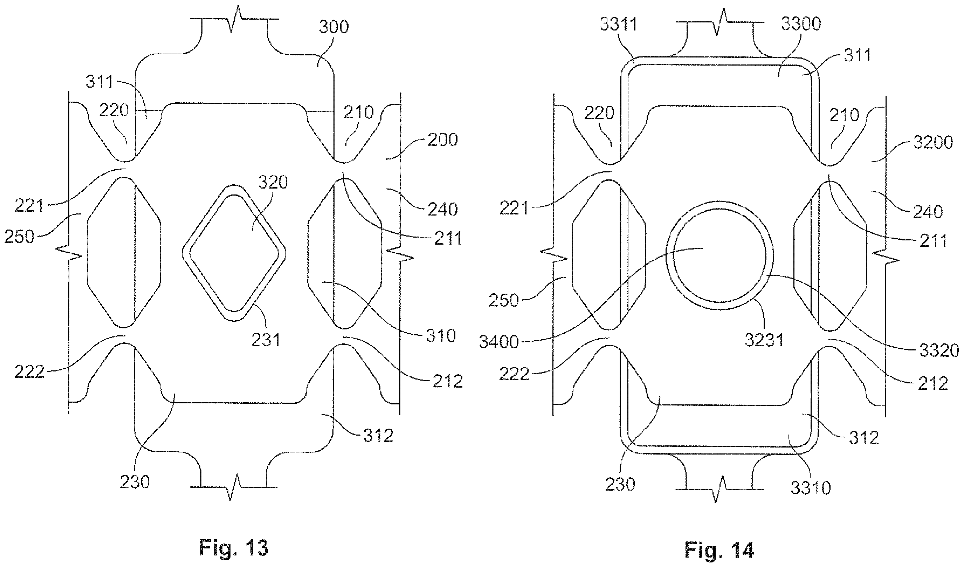

Figure 13 shows a view of the central section 230 of the separating section 200 and the plunger surface 310 of the cutting plunger 300 from below before the predetermined cutting zones 210, 220 of the separating section 200 are cut through by the cutting plunger 300. It can be seen that the chamfered plunger surface 310 is constructed as a substantially flat surface without complicated cutting contours. As a result, the cutting plunger 300 can be produced at particularly low cost.

Figure 13 also shows that the pin 320 on the plunger surface 310 has a rhombus-shaped cross-sectional area. The hole 231 arranged in the central section 230 of the separating section 200 also has a rhombus-shaped cross-sectional area. Here the cross-sectional area of the hole 231 is slightly larger than the cross-sectional area of the pin 320. As a result of the rhombus-shaped cross-sectional areas of the pin 320 and hole 231, a rotational locking of the central section 230 on the plunger surface 310 of the cutting plunger 300 is achieved. Such a rotational locking can alternatively also be achieved through any other non-round cross-sectional area of the pin 320 and hole 231. After the central section 230 has been separated by cutting through the predetermined cutting zones 210, 220, the central section 230 is carried on the plunger surface of the cutting plunger 300. The rotational locking caused by the pin 320 and the hole 231 ensures that the separated central section 230 is not rotated during the further movement of the cutting plunger 300 in the direction of motion 301 and therefore also cannot jam inside the short-circuit shutdown switch 10. The separated central section 230 is also secured on the cutting plunger 300 in the final position of the cutting plunger 300.

Figure 14 shows a view from below of a central section 230 of a separating section 3200 according to another embodiment and a plunger surface 3310 of a cutting plunger 3300 according to another embodiment. The separating section 3200 and the cutting plunger 3300 have consistencies with the separating section 200 and the cutting plunger 300 of Figure 13. Equivalent components are provided with the same reference numerals as in Figure 13.

The plunger surface 3310 of the cutting plunger 3300 is likewise constructed such that it is chamfered so that a front end 311 of the plunger surface 3310 is arranged nearer to the central section 230 of the separating section 3200 than a back end 312 of the plunger surface 3310. The plunger surface 3310 of the cutting plunger 3300 has a contour 3311 all around it on the outside, which is elevated in comparison to the rest of the sections of the plunger surface 3310. In the region of the contour 3311, the plunger surface 3310 of the cutting plunger 3300 is arranged nearer to the separating section 3200 than in the remaining edge sections of the plunger surface 3310. In the illustrated example, the contour 3311 is constructed such that it extends around the whole of the plunger surface 3310. The contour 3311 could, however, also just extend around sections of the plunger surface 3310. The contour 3311 causes a carrying function and rotational locking for the central section 230 of the separating section 3200 after the separation of the central section 230 by cutting through the predetermined cutting zones 210, 220. The contour 3311 arranged around the plunger surface 3310 causes the separated central section 230 to be carried with the cutting plunger 3300 by its further movement in the direction of motion 301 without rotating and jamming in the short-circuit shutdown switch 10 in the process. The separated central section 230 is also secured on the cutting plunger 3300 in the final position of the cutting plunger 3300.

The central section 230 of the separating section 3200 has a hole 3231, which is constructed in the illustrated example such that it is circular. The plunger surface 3310 of the cutting plunger 3300 has an aperture 3320, which extends into the cutting plunger 3300 starting from the plunger surface 3310 parallel to the direction of motion 301 of the cutting plunger 3300. The aperture 3320 of the cutting plunger 3300 is likewise constructed such that it is circular and preferably has about the same diameter as the hole 3231 of the separating section 3200. The housing 400 of the short-circuit shutdown switch in the embodiment shown in Figure 14 has a pin 3400, which is firmly connected to the housing 400. The pin 3400 extends through the hole 3231 in the central section 230 of the separating section 3200 into the aperture 3320 of the cutting plunger 3300. The pin 3400 thereby performs a propulsion function for the cutting plunger 3300, by which the cutting plunger 3300 is carried in a movement in the direction of motion 301. Moreover, the pin 3400 also guarantees that the central section 230 is carried with the cutting plunger 3300 after the predetermined cutting zones 210, 220 of the separating section 3200 have been cut.

Since a rotational locking is already guaranteed for the central section 230 by the contour 3311 of the plunger surface 3310 in the case of the embodiment shown in Figure 14, the aperture 3320 and the hole 3231 as well as the pin 3400 can each be constructed in this embodiment with disc-shaped cross sections. It is, of course, also possible to construct the hole 3231, the aperture 3320 and the pin 3400 with non-round cross sections. A combination of other features of the embodiments of Figures 13 and 14 is, of course, also possible.

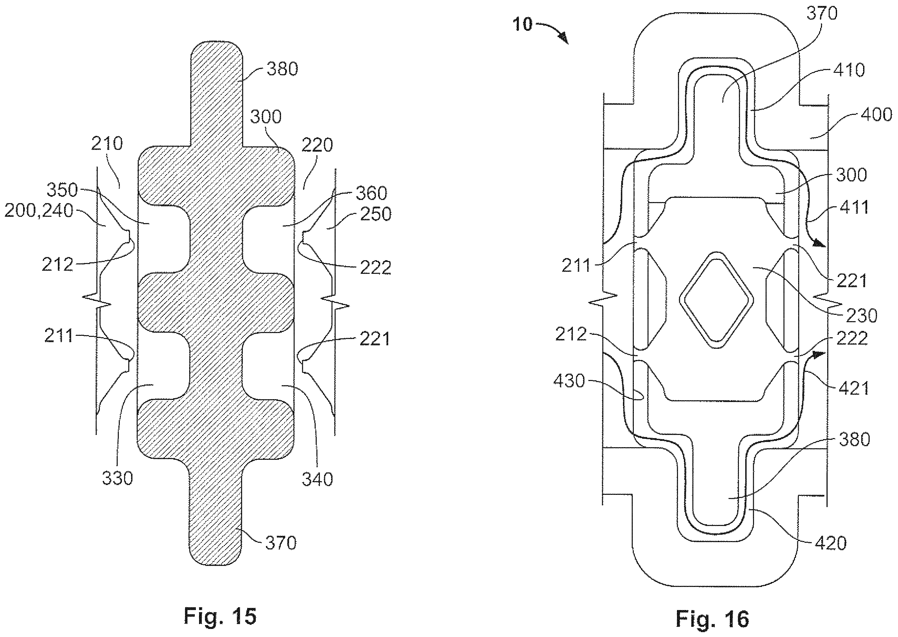

Figure 15 shows a view of the cutting plunger 300 and the inlets 240, 250 of the separating section 200 after the predetermined cutting zones 210, 220 have been cut, looking towards the direction of motion 301 of the cutting plunger 300. Here the cutting plunger 300 is shown in cross section. It can be seen that the outer surface of the cutting plunger 300 facing the first inlet 240 of the separating section 200 has a first groove 330 and a third groove 350. The outer edge of the cutting plunger 300 facing the second inlet 250 of the separating section 200 has a second groove 340 and a fourth groove 360. Each of the grooves is orientated parallel to the direction of motion 301 of the cutting plunger 300. The first groove 330 is arranged in the region of a part of the first separating web 211 of the first predetermined cutting zone 310 remaining on the first inlet 340. The third groove 350 is arranged in the region of a part of the third separating web 212 remaining on the first inlet 240. The second groove 340 is arranged in the region of a part of the second separating web 221 remaining on the second inlet 250. The fourth groove 360 is arranged in the region of a part of the fourth separating web 222 remaining on the second inlet 250. Due to the grooves 330, 340, 350, 360 it is guaranteed that the parts of the separating webs 211, 212, 221, 222 remaining on the inlets 240, 250 no longer engage with the cutting plunger 300 during the further movement of the cutting plunger 300 after the predetermined cutting zones 210, 220 have been cut, thereby generating no additional friction. Moreover, additional air gaps are created by the grooves 330, 340, 350, 360.

Figure 15 also shows that the cutting plunger 300 has a longitudinal rib 370, 380 on each of the two sides, which are orientated perpendicular to the sides that have the grooves 330, 340, 350, 360. A first longitudinal rib 370 is arranged on the first side. A second longitudinal rib 380 is arranged on the second side. The longitudinal ribs 370, 380 are each orientated parallel to the direction of motion 301 of the cutting plunger 300.

Figure 16 shows a view of the cutting plunger 300 arranged inside the housing 400 of the short-circuit shutdown switch 10 from below. In the foreground in front of the plunger surface 310 of the plunger 300, the central section 230 of the separating section 200 of the load current path 100 is visible. A plunger receptacle 430 of the housing 400, can also be seen, into which the cutting plunger 300 is inserted in the direction of motion 301 when the predetermined cutting zones 210, 220 of the separating section 200 are cut through by the cutting plunger 300.

Figure 16 also shows that the housing 400 has a first guide groove 410 and a second guide groove 420. The guide grooves 410, 420 are orientated parallel to the direction of motion 301 of the cutting plunger 300. The first longitudinal rib 370 of the cutting plunger 300 is arranged in the first guide groove 410. The second longitudinal rib 380 of the cutting plunger 300 is arranged in the second guide groove 420. A rotational locking of the cutting plunger 300 inside the housing 400 is brought about by the longitudinal ribs 370, 380 of the cutting plunger 300 arranged in the guide grooves 410, 420 of the housing 400. The longitudinal ribs 370, 380 arranged in the guide grooves 410, 420 also bring about propulsion of the cutting plunger 300 when the cutting plunger 300 is moved in the direction of motion 301.

The first longitudinal rib 370 of the cutting plunger 300 also brings about an extension of a first air and creepage gap 411 between a part of the first separating web 211 remaining on the first inlet 240 of the separating section 200 and a part of the second separating web 221 remaining on the second inlet 250 of the separating section 200 after the first predetermined cutting zone 210 and the second predetermined cutting zone 220 have been cut through. Accordingly, the second longitudinal rib 380 brings about an extension of a second air and creepage gap 421 between a part of the third separating web 212 remaining on the first inlet 240 and a part of the fourth separating web 220 remaining on the second inlet 250. The extended air and creepage gaps 411, 421 reduce the risk of an electrical arc between the first inlet 240 and the second inlet 250 of the separating section 200 after the separation of the central section 230.

In the perspective view of the short-circuit shutdown switch 10 shown in Figure 1, it can be seen that the housing 400 has a switching chamber 460. The switching chamber 460 is provided to accommodate the cutting plunger 200, which is not shown in Figure 1. Moreover, a device to trigger and move the cutting plunger 300 in the event of a short circuit is arranged inside the switching chamber 460. This device can, for example, comprise a mechanical tensioning device having a spring element.

Furthermore, Figure 1 shows that a first magnet 440 and a second magnet 450 are arranged inside the housing 400. In the illustrated example, the magnets 440, 450 are arranged transverse to the current flow direction 102 and to the direction of motion 301 of the cutting plunger 300. It would, however, also be possible to arrange the magnets 440, 450 along the direction of motion 301 of the cutting plunger 300. The magnets 440, 450 can serve to extinguish an arc occurring when the predetermined cutting zones 210, 220 of the separating section 200 are cut through. The magnets 440, 450 can, however, also be omitted.

A part of the first conductor section 110 of the load current path 100 arranged outside the housing 400 has a first screw connection 111. A section of the second conductor section 120 arranged outside the housing 400 has a second screw connection 121. The screw connections 111, 121 are constructed as screw holes in the illustrated example. The short-circuit shutdown switch 100 can be inserted into an electric circuit using the screw connections 111, 121.

### List of Reference Numerals

- 10: short-circuit shutdown switch

- 100: load current path
- 101: first thickness
- 102: current flow direction
- 110: first conductor section
- 111: first screw connection
- 120: second conductor section
- 121: second screw connection
- 130: first connection section
- 140: second connection section

- 200: separating section
- 201: second thickness
- 210: first predetermined cutting zone
- 211: first separating web
- 212: third separating web
- 220: second predetermined cutting zone
- 221: second separating web
- 222: fourth separating web
- 230: central section
- 231: hole
- 240: first inlet
- 250: second inlet

- 300: cutting plunger
- 301: direction of motion
- 302: cutting depth
- 310: plunger surface
- 311: front end
- 312: back end
- 320: pin
- 330: first groove
- 340: second groove
- 350: third groove
- 360: fourth groove
- 370: first longitudinal rib
- 380: second longitudinal rib

- 400: housing
- 410: first guide groove
- 411: first air gap
- 420: second guide groove
- 421: second air gap
- 430: plunger receptacle
- 440: first magnet
- 450: second magnet
- 460: switching chamber

- 1200: separating section
- 1231: first lower blade
- 1232: second lower blade
- 1241: first upper blade
- 1242: second upper blade
- 1251: third upper blade
- 1252: fourth upper blade

- 2200: separating section
- 2210: first predetermined cutting zone
- 2211: first separating web
- 2212: third separating web
- 2220: second predetermined cutting zone
- 2221: second separating web
- 2222: fourth separating web
- 3200: separating section
- 3231: hole

- 3300: cutting plunger
- 3310: plunger surface
- 3311: contour
- 3320: aperture

- 3400: pin

## Claims

1. Short-circuit shutdown switch (10) having
a load current path (100) provided to carry a load current,
a central section (230) arranged between a first predetermined cutting zone (210, 2210) and a second predetermined cutting zone (220, 2220) in the load current path (100),
and a cutting plunger (300, 3300) provided to cut the first predetermined cutting zone (210, 2210) and the second predetermined cutting zone (220, 2220), **characterised in that** the central section (230) has a hole (231), wherein the cutting plunger (300) has a pin (320),
wherein the pin (320) is arranged inside the hole (231).

2. Short-circuit shutdown switch (10) according to claim 1,
wherein the load current path (100) comprises a first conductor section (110) and a second conductor section (120),
wherein a cutting zone (200, 1200, 2200, 3200) comprising the central section (230) is arranged between the first conductor section (110) and the second conductor section (120) in the load current path (100).

3. Short-circuit shutdown switch (10) according to claim 2,
wherein the conductor sections (110, 120) and the cutting zone (200, 1200, 2200, 3200) are constructed such that they are formed of one or multiple parts.

4. Short-circuit shutdown switch (10) according to either claims 2 or claim 3,
wherein the first predetermined cutting zone (210, 2210) has a first separating web (211, 2211),
wherein the second predetermined cutting zone (220, 2220) has a second separating web (221, 2221),
wherein the first separating web (211, 2211) and the second separating web (221, 2221) each have a reduced cross section in comparison to the other separating section (200, 1200, 2200, 3200).

5. Short-circuit shutdown switch (10) according to claim 4,
wherein the first separating web (2211) and the second separating web (2221) are staggered laterally in relation to the intended current flow direction (102).

6. Short-circuit shutdown switch (10) according to either claims 4 or claim 5,
wherein the first predetermined cutting zone (210, 2210) has two first separating webs (211, 2211, 212, 2212),
wherein the second predetermined cutting zone (220, 2220) has two second separating webs (221, 2221, 222, 2222).

7. Short-circuit shutdown switch (10) according to any of claims 2 to 6,
wherein the separating section (1200) has an angled blade (1231, 1232, 1241, 1242, 1251, 1252).

8. Short-circuit shutdown switch (10) according to any of the preceding claims,
wherein the cutting plunger (300, 3300) can be pre-stressed over a spring element in a resting position.

9. Short-circuit shutdown switch (10) according to any of the preceding claims,
wherein a plunger surface (310, 3310) of the cutting plunger (300, 3300) facing the central section (230) is chamfered.

10. Short-circuit shutdown switch (10) according to any of the preceding claims,
wherein the hole (231, 3231) and the pin (320, 3400) each have a non-circular cross section.

11. Short-circuit shutdown switch (10) according to any of the preceding claims,
wherein an edge region (3311) of a plunger surface (3310) of the cutting plunger facing the central section (230) is elevated in comparison to the rest of the section of the plunger surface (3310) of the cutting plunger (3300).

12. Short-circuit shutdown switch (10) according to any of the preceding claims,
wherein the cutting plunger (300, 3300) has a groove (330, 340, 350, 360) orientated parallel to a direction of motion (301) of the cutting plunger (300, 3300).

13. Short-circuit shutdown switch (10) according to any of the preceding claims,
wherein the short-circuit shutdown switch (10) has a housing (400).

14. Short-circuit shutdown switch (10) according to claim 13,
wherein the cutting plunger (300, 3300) has a longitudinal rib (370, 380) orientated parallel to a direction of motion (301) of the cutting plunger (300, 3300),
wherein the housing (400) has a guide groove (410, 420),
wherein the longitudinal rib (370, 380) is carried in the guide groove (410, 420).

15. Short-circuit shutdown switch (10) according to either claim 13 or claim 14,
wherein a magnet (440, 450) is arranged inside the housing (400).

## Patentansprüche

1. Kurzschluss-Abschaltschalter (10), der Folgendes enthält:
einen Laststrompfad (100), der vorgesehen ist, um einen Laststrom zu führen,
einen zentralen Abschnitt (230), der zwischen einer ersten vorgegebenen Schneidzone (210, 2210) und einer zweiten vorgegebenen Schneidzone (220, 2220) im Laststrompfad (100) angeordnet ist, und
einen Schneidkolben (300, 3300), der vorgesehen ist, um die erste vorgegebene Schneidzone (210, 2210) und die zweite vorgegebene Schneidzone (220, 2220) zu schneiden,
**dadurch gekennzeichnet, dass** der zentrale Abschnitt (230) ein Loch (231) aufweist, wobei
der Schneidkolben (300) einen Bolzen (320) enthält und
der Bolzen (320) im Loch (231) angeordnet ist.

2. Kurzschluss-Abschaltschalter (10) nach Anspruch 1, wobei
der Laststrompfad (100) einen ersten Leiterabschnitt (110) und einen zweiten Leiterabschnitt (120) enthält,
eine Schneidzone (200, 1200, 2200, 3200), die den zentralen Abschnitt (230) enthält, zwischen dem ersten Leiterabschnitt (110) und dem zweiten Leiterabschnitt (120) im Laststrompfad (100) angeordnet ist.

3. Kurzschluss-Abschaltschalter (10) nach Anspruch 2, wobei
die Leiterabschnitte (110, 120) und die Schneidzone (200, 1200, 2200, 3200) derart konstruiert sind, dass sie aus einem oder mehreren Teilen bestehen.

4. Kurzschluss-Abschaltschalter (10) nach Anspruch 2 oder Anspruch 3, wobei
die erste vorgegebene Schneidzone (210, 2210) einen ersten Trennsteg (211, 2211) aufweist,
die zweite vorgegebene Schneidzone (220, 2220) einen zweiten Trennsteg (221, 2221) aufweist,
der erste Trennsteg (211, 2211) und der zweite Trennsteg (221, 2221) jeweils einen verringerten Querschnitt im Vergleich zum weiteren Trennabschnitt (200, 1200, 2200, 3200) besitzen.

5. Kurzschluss-Abschaltschalter (10) nach Anspruch 4, wobei
der erste Trennsteg (2211) und der zweite Trennsteg (2221) in Bezug auf die beabsichtigte Stromflussrichtung (102) seitlich versetzt sind.

6. Kurzschluss-Abschaltschalter (10) nach Anspruch 4 oder Anspruch 5, wobei
die erste vorgegebene Schneidzone (210, 2210) zwei erste Trennstege (211, 2211, 212, 2212) besitzt und
die zweite vorgegebene Schneidzone (220, 2220) zwei zweite Trennstege (221, 2221, 222, 2222) besitzt.

7. Kurzschluss-Abschaltschalter (10) nach einem der Ansprüche 2 bis 6, wobei
der Trennabschnitt (1200) eine abgewinkelte Klinge (1231, 1232, 1241, 1242, 1251, 1252) besitzt.

8. Kurzschluss-Abschaltschalter (10) nach einem der vorhergehenden Ansprüche, wobei
der Schneidkolben (300, 3300) über ein Federelement in eine Ruhestellung vorbelastet werden kann.

9. Kurzschluss-Abschaltschalter (10) nach einem der vorhergehenden Ansprüche, wobei
eine Kolbenfläche (310, 3310) des Schneidkolbens (300, 3300), die dem zentralen Abschnitt (230) zugewandt ist, abgeschrägt ist.

10. Kurzschluss-Abschaltschalter (10) nach einem der vorhergehenden Ansprüche, wobei
das Loch (231, 3231) und der Bolzen (320, 3400) jeweils einen nicht kreisförmigen Querschnitt besitzen.

11. Kurzschluss-Abschaltschalter (10) nach einem der vorhergehenden Ansprüche, wobei
ein Kantenbereich (3311) einer Kolbenfläche (3310) des Schneidkolbens (3300), die dem zentralen Bereich (230) zugewandt ist, im Vergleich zum Rest des Abschnittes der Kolbenfläche (3310) des Schneidkolbens (3300) erhöht ist.

12. Kurzschluss-Abschaltschalter (10) nach einem der vorhergehenden Ansprüche, wobei
der Schneidkolben (300, 3300) eine Nut (330, 340, 350, 360), die parallel zu einer Bewegungsrichtung (301) des Schneidkolbens (300, 3300) orientiert ist, besitzt.

13. Kurzschluss-Abschaltschalter (10) nach einem der vorhergehenden Ansprüche, wobei
der Kurzschluss-Abschaltschalter (10) ein Gehäuse (400) besitzt.

14. Kurzschluss-Abschaltschalter (10) nach Anspruch 13, wobei
der Schneidkolben (300, 3300) einen Längssteg (370, 380), der parallel zu einer Bewegungsrichtung (301) des Schneidkolbens (300, 3300) orientiert ist, besitzt,
das Gehäuse (400) eine Führungsnut (410, 420) besitzt und
der Längssteg (370, 380) in der Führungsnut (410, 420) geführt wird.

15. Kurzschluss-Abschaltschalter (10) nach Anspruch 13 oder Anspruch 14, wobei
im Gehäuse (400) ein Magnet (440, 450) angeordnet ist.

## Revendications

1. Commutateur de fermeture en cas de court-circuit (10) présentant
un trajet de courant de charge (100) fourni pour acheminer un courant de charge,
une section centrale (230) disposée entre une première zone de coupure prédéterminée (210, 2210) et une seconde zone de coupure prédéterminée (220, 2220) dans le trajet de courant de charge (100),
et un piston de coupure (300, 3300) fourni pour couper la première zone de coupure prédéterminée (210, 2210) et la seconde zone de coupure prédéterminée (220, 2220),
**caractérisé en ce que** la section centrale (230) présente un orifice (231),
dans lequel le piston de coupure (300) comporte une tige (320),
dans lequel la tige (320) est disposée à l'intérieur de l'orifice (231).

2. Commutateur de fermeture en cas de court-circuit (10) selon la revendication 1,
dans lequel le trajet de courant de charge (100) comprend une première section conductrice (110) et une seconde section conductrice (120),
dans lequel une zone de coupure (200, 1200, 2200, 3200) comprenant la section centrale (230) est disposée entre la première section conductrice (110) et la seconde section conductrice (120) dans le trajet de courant de charge (100).

3. Commutateur de fermeture en cas de court-circuit (10) selon la revendication 2,
dans lequel les sections conductrices (110, 120) et la zone de coupure (200, 1200, 2200, 3200) sont construites de manière à être formées d'une ou de multiples parties.

4. Commutateur de fermeture en cas de court-circuit (10) selon l'une ou l'autre des revendications 2 ou 3,
dans lequel la première zone de coupure prédéterminée (210, 2210) présente une première paroi de séparation (211, 2211),
dans lequel la seconde zone de coupure prédéterminée (220, 2220) présente une seconde paroi de séparation (221, 2221),
dans lequel la première paroi de séparation (211, 2211) et la seconde paroi de séparation (221, 2221) ont chacune une coupure transversale réduite en comparaison à l'autre section de séparation (200, 1200, 2200, 3200).

5. Commutateur de fermeture en cas de court-circuit (10) selon la revendication 4,
dans lequel la première paroi de séparation (2211) et la seconde paroi de séparation (2221) sont disposées latéralement en quinconce relativement au sens de passage de courant prévu (102).

6. Commutateur de fermeture en cas de court-circuit (10) selon l'une ou l'autre des revendications 4 ou 5, dans lequel la première zone de coupure prédéterminée (210, 2210) présente deux premières parois de séparation (211, 2211, 212, 2212),
dans lequel la seconde zone de coupure prédéterminée (220, 2220) présente deux secondes parois de séparation (221, 2221, 222, 2222).

7. Commutateur de fermeture en cas de court-circuit (10) selon l'une quelconque des revendications 2 à 6,
dans lequel la section de séparation (1200) présente une lame inclinée (1231, 1232, 1241, 1242, 1251, 1252).

8. Commutateur de fermeture en cas de court-circuit (10) selon l'une quelconque des revendications précédentes,
dans lequel le piston de coupure (300, 3300) peut être précontraint par-dessus un élément de ressort dans une position de repos.

9. Commutateur de fermeture en cas de court-circuit (10) selon l'une quelconque des revendications précédentes,
dans lequel une surface de piston (310, 3310) du piston de coupure (300, 3300) faisant face à la section centrale (230) est chanfreinée.

10. Commutateur de fermeture en cas de court-circuit (10) selon l'une quelconque des revendications précédentes,
dans lequel l'orifice (231, 3231) et la tige (320, 3400) ont chacun une coupe transversale non circulaire.

11. Commutateur de fermeture en cas de court-circuit (10) selon l'une quelconque des revendications précédentes,
dans lequel une région de bord (3311) d'une surface de piston (3310) du piston de coupure (3300) faisant face à la section centrale (230) est élevée en comparaison au reste de la section de la surface de piston (3310) du piston de coupure (3300).

12. Commutateur de fermeture en cas de court-circuit (10) selon l'une quelconque des revendications précédentes,
dans lequel le piston de coupure (300, 3300) présente une rainure (330, 340, 350, 360) orientée parallèlement à un sens de déplacement (301) du piston de coupure (300, 3300).

13. Commutateur de fermeture en cas de court-circuit (10) selon l'une quelconque des revendications précédentes,
dans lequel le commutateur de fermeture en cas de court-circuit (10) présente un boîtier (400).

14. Commutateur de fermeture en cas de court-circuit (10) selon la revendication 13,
dans lequel le piston de coupure (300, 3300) présente une nervure longitudinale (370, 380) orientée parallèlement à un sens de déplacement (301) du piston de coupure (300, 3300),
dans lequel le boîtier (400) présente une rainure de guidage (410, 420),
dans lequel la nervure longitudinale (370, 380) est passée dans la rainure de guidage (410, 420).

15. Commutateur de fermeture en cas de court-circuit (10) selon la revendication 13 ou la revendication 14, dans lequel un aimant (440, 450) est disposé à l'intérieur du boîtier (400).
